# EUROPÄISCHE PATENTSCHRIFT

(11) **EP 0 681 159 B1**
(45) Veröffentlichungstag und Bekanntmachung des Hinweises auf die Patenterteilung: **17.12.1997**
(21) Anmeldenummer: 94107103.7
(22) Anmeldetag: 06.05.1994
(51) Int. Cl.: G01B 5/00

(54) **Temperatur-kompensierte Positionsmesseinrichtung**
Position measuring device with temperature compensation
Dispositif de mesure de position à compensation de température

(43) Veröffentlichungstag der Anmeldung: 08.11.1995
(73) Patentinhaber: Dr. Johannes Heidenhain GmbH, D-83292 Traunreut (DE)
(72) Erfinder: Nelle, Dr. Günter, D-83346 Bergen (DE)

(56) Entgegenhaltungen:
- EP-A- 0 118 607
- US-A- 4 569 137
- PATENT ABSTRACTS OF JAPAN vol. 11, no. 52 (P-548) (2499) 18. Februar 1987 & JP-A-61 219 818 (NIPPON KOGAKU K.K.) 30. September 1986

## Beschreibung

Die Erfindung betrifft eine Positionsmeßeinrichtung gemäß dem Oberbegriff des Anspruches 1.

Derartige Positionsmeßeinrichtungen werden zur Messung der Relativlage zweier Bauteile eingesetzt und können als Längen- oder Winkelmeßeinrichtungen ausgeführt sein.

Aus der DE 25 05 587 C3 ist eine Längenmeßeinrichtung bekannt, bei der eine Maßverkörperung an einem Trägerkörper mittels einer Klebeschicht befestigt ist. Um Meßungenauigkeiten bei unterschiedlichen thermischen Ausdehnungskoeffizienten der Maßverkörperung und des Trägerkörpers zu vermeiden, erfolgt die Befestigung ohne direkte Berührung zwischen der Maßverkörperung und des Trägerkörpers, wobei ein elastischer Kleber Verwendung findet. Nachteilig ist dabei, daß die Maßverkörperung durch diese ausschließlich elastische Befestigung nicht ausreichend fest gehalten ist und zu Schwingungen neigt.

Um diesen Nachteil zu vermeiden, wird in der DE 26 43 304 B2 vorgeschlagen, die Maßverkörperung auf den Rändern einer in Meßrichtung verlaufenden rechteckigen Nut eines Trägerkörpers aufliegend zu befestigen. Die Maßverkörperung ist in ihrer Mitte mittels eines unelastischen Klebemittels in der Nut und zu beiden Seiten mittels eines hochelastischen Klebemittels in der Nut mit dem Trägerkörper verbunden. Dies hat wiederum den Nachteil, daß die Maßverkörperung aufgrund der elastischen Befestigung an ausschließlich einer Fläche leicht zum Schwingen angeregt werden kann. Der direkte Kontakt der Maßverkörperung mit den Rändern der Nut hat weiterhin den Nachteil, daß fertigungsbedingte Unebenheiten des Trägerkörpers auf die Maßverkörperung übertragen werden, wodurch bei der Messung Fehler auftreten können.

Um die Schwingungen der Maßverkörperung zu reduzieren, wurde weiterhin vorgeschlagen, die Maßverkörperung nicht nur über eine Fläche an dem Trägerkörper zu befestigen. Eine derartige Positionsmeßeinrichtung ist in der DE 31 18 607 C2 beschrieben. Zur Aufnahme der Maßverkörperung ist in dem Trägerkörper eine Längsnut eingebracht. Die Maßverkörperung steht mit einer Seitenfläche der Nut und mit der Grundfläche der Nut in direktem Kontakt. Der Raum zwischen der weiteren Seitenfläche der Nut und einer Fläche der Maßverkörperung ist mit einem Gummistab und einem elastischen Kleber als Vergußmasse ausgefüllt. Die Maßverkörperung ist also in einem Teilbereich eingespannt befestigt. Der Nachteil bei dieser Einrichtung besteht darin, daß der mit elastischem Kleber auszufüllende Raum relativ breit ist, was sich auf die Schwingungseigenschaften der Maßverkörperung wieder negativ auswirkt.

Ein weiterer Nachteil besteht darin, daß durch die Einspannung der Maßverkörperung mittels des Gummistabes die freie Längsausdehnung zwischen der Maßverkörperung und des Trägerkörpers behindert wird.

In der DE 36 05 789 C1 ist ferner eine Positionsmeßeinrichtung beschrieben, bei der die Maßverkörperung ebenfalls in einer Nut eines Trägerkörpers befestigt ist. Die Maßverkörperung ist an einer Schmalseite in dauerelastischer Vergußmasse eingebettet. Um Längenausdehnungen zwischen der Maßverkörperung und dem Trägerkörper zu gewährleisten, muß die Vergußmasse hochelastisch sein, was die Schwingungseigenschaften nachteilig beeinflußt.

In der US 4,569,137 und der JP-A 61-219818 sind Positionsmeßeinrichtungen beschrieben, bei denen der Maßstab ebenfalls in einer Nut eines Trägerkörpers befestigt ist. Die Befestigung erfolgt auf einer Seite des Maßstabes durch eine Schicht, die bei der US 4,569,137 eine Klebeschicht ist und auf der anderen Seite des Maßstabes durch ein Federelement in Form einer Gummischnur.

In einem speziellen Ausführungsbeispiel in US 4,569,137 ist die Nut selbst als Federblech ausgebildet. Dabei ist der Maßstab mit einer Seite über eine Klebstoffschicht an einer Seite der Nut befestigt, und die andere Seite der Nut drückt mit einer halbkreisförmingem Ausbuchtung auf die andere Seite des Maßstabs.

Aufgabe der Erfindung ist es, eine Positionsmeßeinrichtung zu schaffen, bei der ungleiche thermische Eigenschaften der Maßverkörperung und des Trägerkörpers praktisch keine Verfälschungen des Meßergebnisses hervorrufen und die Maßverkörperung trotzdem relativ schwingungsfest am Trägerkörper befestigt ist.

Diese Aufgabe wird erfindungsgemäß durch die Merkmale des Anspruches 1 gelöst.

Die Vorteile der Erfindung bestehen darin, daß eine nahezu ungehinderte Längenausdehnung des Trägerkörpers relativ zur Maßverkörperung erfolgen kann. Dieser Vorteil kommt besonders dann zum Tragen, wenn die Maßverkörperung aus Glas und der Trägerkörper aus Metall, beispielsweise Aluminium ist.

Weiterhin ist eine stabile und schwingungsarme Befestigung gewährleistet.

Zweckdienliche Ausbildungen sind Gegenstand der abhängigen Ansprüche.

Längenmeßeinrichtungen nach der Erfindung werden anhand der Zeichnungen näher erläutert.

Es zeigt
- Figur 1: eine perspektivische Darstellung einer Längenmeßeinrichtung im Teilschnitt,
- Figur 2: einen Querschnitt eines Ausschnittes Z der Längenmeßeinrichtung gemäß Figur 1.

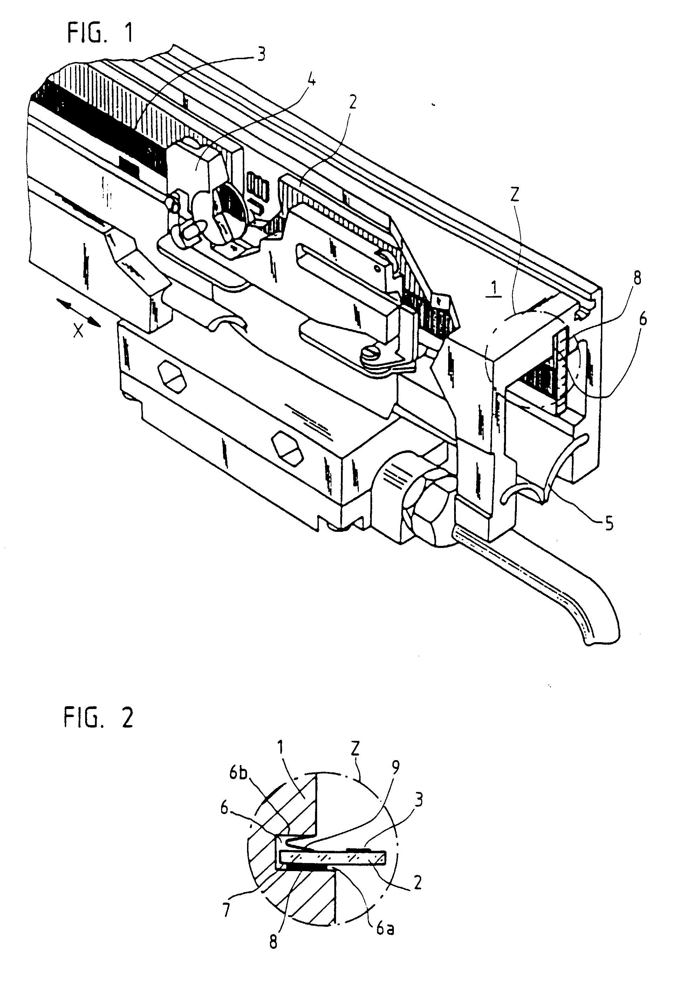

Eine in Figur 1 dargestellte Längenmeßeinrichtung besteht aus einem Gehäuse 1 als Trägerkörper für eine Maßverkörperung 2. Auf der Maßverkörperung 2 ist eine Teilung 3 aufgebracht, die von einer Abtasteinrichtung 4 photoelektrisch abgetastet wird. Das Gehäuse 1 besteht aus Aluminium und die Maßverkörperung 2 aus Glas. Um die Relativbewegung zwischen zwei Bauteilen zu messen, ist das Gehäuse 1 an einem dieser Bauteile und die Abtasteinrichtung 4 am anderen Bauteil befestigt. Die Maßverkörperung 2 und die Abtasteinrichtung 4 sind durch das Gehäuse 1 und durch eine Dichtung 5 vor Umwelteinflüssen abgeschirmt.

Gemäß der Erfindung ist in dem Gehäuse 1 eine in Meßrichtung X verlaufende Nut 6 vorgesehen, in der die Maßverkörperung 2 längsverschieblich und trotzdem relativ stabil und schwingungsfest eingebracht ist. Die Maßverkörperung 2 ist an einer Seitenfläche 7 mit einer dünnen elastischen Klebstoffschicht 8 (Dicke etwa 0,lmm) versehen. Die Klebstoffschicht 8 zwischen der Maßverkörperung 2 und dem Gehäuse 1 ist eine fixierende Trennschicht, die Relativbewegungen zwischen der Maßverkörperung 2 und dem Gehäuse 1 aufgrund von unterschiedlichen Ausdehnungskoeffizienten in Längserstreckung zuläßt. Ein Querschnitt dieser Längenmeßeinrichtung ist als Einzelheit Z in Figur 2 dargestellt.

Die Klebstoffschicht 8, die vorteilhaft silikonfrei ist, verhindert ein Verrutschen der Maßverkörperung 2 gegenüber dem Gehäuse 1 ohne die freie relative Ausdehnung dieser zwei Komponenten wesentlich zu behindern. Reibung zwischen Gehäuse 1 und Maßverkörperung 2 wird weitestgehend verhindert.

Durch Federn 9, die in die Nut 6 zwischen Nutwand 6b und Maßverkörperung 2 eingespreizt werden, wird verhindert, daß die Maßverkörperung 2 unter den Kräften der Abtasteinrichtung 4 von der Klebstoffschicht 8 abgeschält wird. Ebenso wird ein Lösen der Maßverkörperung 2 von der Klebstoffschicht 8 aufgrund von Vibrationen und Beschleunigungskräften verhindert.

Vorteilhaft kann in Maßstabmitte eine stärkere Feder eingesetzt werden, um den Lagenullpunkt zu sichern.

Die Erfindung ist auch bei Winkelmeßeinrichtungen einsetzbar. In diesem Fall ist die Teilung der Maßverkörperung auf einem Kreisbogen aufgebracht.

Weiterhin kann die Erfindung nicht nur bei Maßverkörperungen aus Glas verwendet werden. Die Maßverkörperung kann auch aus Metall oder Kunststoff bestehen. Ebenso ist die Erfindung nicht auf das lichtelektrische Abtastprinzip beschränkt. Die Maßverkörperung kann auch eine Teilung aufweisen, die auf dem kapazitiven, induktiven oder magnetischen Prinzip beruht. Auf der Maßverkörperung können auch mehrere Teilungsspuren oder eine absolute Informationsspur aufgebracht sein.

Der Trägerkörper für die Maßverkörperung 2 muß nicht notwendigerweise ein Gehäuse sein, er kann auch nur eine Metallschiene sein, wie sie bei sogenannten offenen Systemen bekannt ist.

## Patentansprüche

1. Positionsmeßeinrichtung mit einer Maßverkörperung (2), die von einer Abtasteinrichtung (4) zur Ermittlung von Positionsmeßwerten abgetastet wird, wobei die Maßverkörperung (2) in einer Nut (6) eines Trägerkörpers (1) befestigt ist, indem zwischen einer ersten Seitenfläche (7) der Maßverkörperung (2) und einer ersten Fläche (6a) der Nut (6) eine relativ dünne Klebstoffschicht (8) eingebracht ist, und zwischen einer zweiten Seitenfläche der Maßverkörperung (2) und einer zweiten Fläche (6b) der Nut (6) wenigstens ein Federelement (9) eingespreizt ist, welches eine Klemmung der Maßverkörperung (2) im Trägerkörper (1) bewirkt, aber die thermische Längenänderungen der Maßverkörperung (2) im wesentlichen unabhängig vom Trägerkörper (1) in Meßrichtung (X) zuläßt, dadurch gekennzeichnet, daß das Federelement ein Federblech (9) ist.

2. Positionsmeßeinrichtung nach Anspruch 1, dadurch gekennzeichnet, daß voneinander beabstandete Federelemente (9) vorgesehen sind.

3. Positionsmeßeinrichtung nach Anspruch 1, dadurch gekennzeichnet, daß an einer bevorzugten Position längs der Maßverkörperung (2) ein verstärktes Federelement zur Sicherung des Lagenullpunktes vorgesehen ist.

4. Positionsmeßeinrichtung nach Anspruch 1, dadurch gekennzeichnet, daß sich die Klebstoffschicht (8) und das Federelement (9) in der Nut (6) unter Zwischenschaltung der Maßverkörperung (2) gegenüberliegen.

5. Positionsmeßeinrichtung nach Anspruch 1, dadurch gekennzeichnet, daß die Klebstoffschicht eine Klebefolie ist.

6. Positionsmeßeinrichtung nach Anspruch 1, dadurch gekennzeichnet, daß der Trägerkörper (1) ein Hohlprofil ist.

7. Positionsmeßeinrichtung nach Anspruch 1, dadurch gekennzeichnet, daß das Federblech (9) V-förmig geformt ist und sich ein Schenkel an der zweiten Fläche (6b) der Nut (6) abstützt und sich der gegenüberliegende Schenkel an der zweiten Seitenfläche der Maßverkörperung (2) abstützt.

8. Positionsmeßeinrichtung nach Anspruch 1, dadurch gekennzeichnet, daß die Klebstoffschicht (8) silikonfrei ist.

## Claims

1. A position measuring device with a measuring body (2), which is sensed by a sensing device (4) to determine position measurement values, wherein the measuring body (2) is fixed in a groove (6) of a support body (1), in that a relatively thin layer of adhesive (8) is applied between a first side face (7) of the measuring body (2) and a first surface (6a) of the groove (6) and at least one spring element (9) is sprung between a second side surface of the measuring body (2) and a second surface (6b) of the groove (6) and effects a clamping of the measuring body (2) in the support body (1) but allows the thermal changes in length of the measuring body (2) in the measuring direction (X) substantially independently of the support body (1), characterized in that the spring element is a spring plate (9).

2. A position measuring device according to claim 1, characterized in that spring elements (9) spaced from one another are provided.

3. A position measuring device according to claim 1, characterized in that a stronger spring element is provided at a preferential position along the measuring body (2) to fix the positional zero point.

4. A position measuring device according to claim 1, characterized in that the layer of adhesive (8) and the spring element (9) are opposite one another in the groove (6) with the measuring body (2) interposed between them.

5. A position measuring device according to claim 1, characterized in that the layer of adhesive is an adhesive film.

6. A position measuring device according to claim 1, characterized in that the support body (1) is a hollow section.

7. A position measuring device according to claim 1, characterized in that the spring plate (9) is in V-shaped form and one flank bears on the second surface (6b) of the groove (6) and the opposite flank bears on the second side surface of the measuring body (2).

8. A position measuring device according to claim 1, characterized in that the layer of adhesive (8) is silicone-free.

## Revendications

1. Dispositif de mesure de position, comportant une mesure matérialisée (2) qui est palpée par un dispositif de palpage (4) aux fins de déterminer des valeurs de mesure de position, la mesure matérialisée (2) étant fixée dans une rainure (6) d'un support (1) en appliquant entre une première surface latérale (7) de la mesure matérialisée (2) et une première surface (6a) de la rainure (6) une couche (8) d'adhésif relativement fine et en insérant entre une deuxième surface latérale de la mesure matérialisée (2) et une deuxième surface (6b) de la rainure (6) au moins un élément élastique (9) qui assure un blocage de la mesure matérialisée (2) sur le support (1) mais permet les variations de longueur d'origine thermique de la mesure matérialisée (2) essentiellement indépendamment du support (1) dans la direction de mesure (X), caractérisé par le fait que l'élément élastique est une tôle élastique à ressort (9).

2. Dispositif de mesure selon la revendication 1, caractérisé par le fait qu'il est prévu deux éléments élastiques (9) espacés l'un de l'autre.

3. Dispositif de mesure selon la revendication 1, caractérisé par le fait qu'un élément élastique renforcé est prévu en un point particulier, le long de la mesure matérialisée (2), aux fins de fixer le point zéro.

4. Dispositif de mesure selon la revendication 1, caractérisé par le fait que la couche d'adhésif (8) et l'élément élastique (9) dans la rainure (6) sont disposés en vis-à-vis avec la mesure matérialisée (2) placé entre deux.

5. Dispositif de mesure selon la revendication 1, caractérisé par le fait que la couche d'adhésif (8) est un film adhésif.

6. Dispositif de mesure selon la revendication 1, caractérisé par le fait que le support (1) est un profilé creux.

7. Dispositif de mesure selon la revendication 1, caractérisé par le fait que la tôle élastique à ressort (9) est conformée en V et qu'une aile prend appui sur la deuxième surface (6b) de la rainure (6) et que l'aile en vis-à-vis prend appui sur la deuxième surface latérale de la mesure matérialisée (2).

8. Dispositif de mesure selon la revendication 1, caractérisé par le fait que la couche d'adhésif (8) ne contient pas de silicones.
